(19) Europäisches Patentamt
European Patent Office
Office européen des brevets

(11) **EP 4 692 176 A1**

(12) **EUROPEAN PATENT APPLICATION**
published in accordance with Art. 153(4) EPC

(43) Date of publication:
**11.02.2026 Bulletin 2026/07**

(21) Application number: **24779019.9**

(22) Date of filing: **28.02.2024**

(51) International Patent Classification (IPC):
*C08J 3/12* $^{(2006.01)}$    *C08L 29/04* $^{(2006.01)}$
*C08L 31/02* $^{(2006.01)}$    *C08L 101/14* $^{(2006.01)}$

(52) Cooperative Patent Classification (CPC):
**C08J 3/12; C08L 29/04; C08L 31/02; C08L 101/14**

(86) International application number:
**PCT/JP2024/007427**

(87) International publication number:
**WO 2024/202880 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023058950**

(71) Applicant: **Denka Company Limited
Tokyo 103-8338 (JP)**

(72) Inventor: **YAMASHITA,Akihiro
Tokyo 103-8338 (JP)**

(74) Representative: **Müller-Boré & Partner
Patentanwälte PartG mbB
Friedenheimer Brücke 21
80639 München (DE)**

(54) **POWDER PRODUCT**

(57)    A powder product including: polymer particles obtained by saponification of a polymer of a vinyl ester monomer or a copolymer of a vinyl ester monomer and another monomer, and having a particle size distribution with a content of particles having a particle size of 180 $\mu$m or less of 50 mass% or more and a content of particles having a particle size of 500 $\mu$m or more of 10 mass % or less; and a water-soluble additive in a mass of 0.1 mass% or more and 10 mass% or less based on the mass of the polymer particles, wherein the water-soluble additive has a viscosity at 20°C in the range of 30 to 200 mPa·s, and a surface tension in the range of 50 to 72 mN/m as measured for a 0.05 mass% aqueous solution of the water-soluble additive at 20°C by a pendant drop method, and the powder product has an angle of repose of 60° or less as measured by a funnel injection method in accordance with JIS R9301-2-2:1999.

EP 4 692 176 A1

**Description**

**FIELD OF THE INVENTION**

The present invention relates to a powder product.

**BACKGROUND OF THE INVENTION**

A polymer having a polyvinyl alcohol (PVA) skeleton (hereinafter, also collectively referred to as "polyvinyl alcohol-based polymer", "vinyl alcohol-based polymer", or simply "PVA" in the specification) is known as a hydrophilic synthetic resin, and various uses have been developed by taking advantage of the characteristics.

Depending on the application, PVA in powder form may be expected to be dispersed in water. Adjusting the saponification degree of PVA has been a common practice in order to improve the solubility of PVA, and is also described in Denka Poval product introduction by the present applicant.

**PRIOR ART**

Non Patent Literature

[Non Patent Literature 1] "Denka Poval", issued by Denka Co., Ltd., in 2016, https://www.denka.co.jp/pdf/product/detail/00009/poval_catalog.pdf

**SUMMARY OF THE INVENTION**

**TECHNICAL PROBLEM**

Since it is generally known that the larger the surface area of a solute, the faster the dissolving rate into a solvent, it is desirable that the PVA particles have a small particle size. On the other hand, however, with a small PVA particle size, problems in dissolving the particles in water occur including generation of lumps (lumps of powder that keep floating on the water surface) and aggregates in the water.

The formation of the lumps on the water surface and the aggregates in water significantly reduces the solubility of PVA particles in water. In the conventional technique, vigorous mixing using a high-power mixer has been required to dissolve the lumps and the aggregates, which has further caused a problem of undesirable foaming. It has been also difficult to achieve compatibility with the performance required for a powder product that dissolves in water.

Furthermore, according to the conventional technique, weak stirring only promotes aggregation of PVA particles, causing a problem of easy generation of aggregates in water.

The problem described above has not been resolved by adjusting the saponification degree according to the conventional technique only, and therefore a novel PVA product has been required.

**SOLUTION TO PROBLEM**

In order to solve the problem, the present invention may provide the following.

Aspect 1.

A powder product comprising:

polymer particles obtained by saponification of a polymer of a vinyl ester monomer or a copolymer of a vinyl ester monomer and another monomer, and having a particle size distribution with a content of particles having a particle size of 180 $\mu$m or less of 50 mass% or more and a content of particles having a particle size of 500 $\mu$m or more of 10 mass% or less; and

a water-soluble additive in a mass of 0.1 mass% or more and 10 mass% or less based on a mass of the polymer particles,

wherein the water-soluble additive has a viscosity at 20°C in a range of 30 to 200 mPa·s, and a surface tension in a range of 50 to 72 mN/m as measured for a 0.05 mass% aqueous solution of the water-soluble additive at 20°C by a pendant drop method, and

wherein the powder product has an angle of repose of 60° or less as measured by a funnel injection method in accordance with JIS R9301-2-2:1999.

Aspect 2.

The powder product according to aspect 1, wherein the powder product has an angle of difference of 10° or more as measured by the funnel injection method.

Aspect 3.

The powder product according to aspect 1 or 2, wherein the powder product has a compressibility of 45% or less, calculated by the following formula:

[Compressibility] (%) = 100 × ([Tapped bulk density] - [Initial bulk density]) / [Tapped bulk density] from initial bulk density and tapped bulk density measured by a method in accordance with JIS R1628:1997.

Aspect 4.

The powder product according to any of aspects 1 to 3, wherein the polymer particles comprise a polymer of a vinyl ester monomer.

Aspect 5.

The powder product according to any of aspects 1 to 3, wherein the polymer particles comprise a copolymer of a vinyl ester monomer and another monomer.

Aspect 6.

The powder product according to any of aspects 1 to 3 and 5, wherein the other monomer is a polyfunctional monomer.

Aspect 7.

The powder product according to aspect 6, wherein the polyfunctional monomer is a compound having two or more polymerizable unsaturated bonds in a molecule.

**ADVANTAGEOUS EFFECT OF INVENTION**

According to the present invention, a powder product not only exhibiting high solubility in water even under weak mixing conditions, but also having suitability required for powder products, may be obtained.

**DETAILED DESCRIPTION OF THE INVENTION**

In the specification, unless otherwise specified, numerical ranges include the upper limit value thereof and the lower limit value thereof. In the specification, a polymer is as defined by International Union of Pure and Applied Chemistry (IUPAC) Commission on Macromolecular Nomenclature, that is, "polymer molecule is a molecule having a large relative molecular mass and has a structure composed of a large number of repetitions of a unit that is substantially or conceptually obtained from a molecule having a small relative molecular mass".

The powder product in an embodiment of the present invention includes polymer particles obtained by saponification of a polymer of a vinyl ester monomer or a copolymer of a vinyl ester monomer and another monomer, and a water-soluble additive at a predetermined mass ratio. The powder product has main feature of dissolving in water, and is also usable in dissolving in aqueous solvents other than pure water (tap water, aqueous solutions of hydrophilic solutes, etc.).

Polymer particles

The polymer particles are PVA polymer particles, which may meet the prerequisite for rapid dissolution in an aqueous solvent due to having a specific particle size distribution. The particle size distribution of the polymer particles may be measured by sieving using sieves having an opening of 180 μm and having an opening of 500 μm, respectively, in accordance with the description in JIS Z8815:1994. The polymer particles are required not to contain many particles having an excessively large size for rapid dissolution in an aqueous solvent. Specifically, the following particle ratio is required. The content of particles having a particle size of 500 μm or more (above 500-μm sieve) is 10 mass% or less, and the content of particles having a particle size of 180 μm or less (below 180-μm sieve) is 50 mass% or more. The particle size distribution that does not meet the condition may have an adverse effect on the solubility.

In a preferred embodiment, in the particle size distribution of the polymer particles, the content of particles above the 500-μm sieve may be 5 mass% or less, more preferably 3 mass% or less, still more preferably 1 mass% or less, and furthermore preferably 0.1 mass% or less. In a preferred embodiment, in the particle size distribution of the polymer particles, the content of particles below the 180-μm sieve may be 60 mass% or more, more preferably 70 mass% or more, still more preferably 80 mass% or more, and furthermore preferably 85 mass% or more.

In a preferred embodiment, the saponification degree of the PVA constituting the polymer particles may be 70 to 100 mol%, more preferably 75 to 95 mol%, still more preferably 80 to 95 mol%, and furthermore preferably 80 to 90 mol%. With a saponification degree in the range, the effect of easily improving solubility in aqueous solvents may be obtained. The saponification degree may be measured by the method described in JIS K6726:1994.

In a preferred embodiment, the viscosity of a 4 mass% aqueous solution of PVA constituting the polymer particles at 20°C may be in the range of 1 to 1000 mPa·s, more preferably in the range of 1 to 500 mPa·s, and still more preferably in the range of 1 to 300 mPa·s, as measured at a shear rate of 10 s$^{-1}$ in accordance with the description of the rotational viscometer method in JIS K6726:1994 and JIS K7117:1999. With a viscosity in the range, the effect of improving the solubility in aqueous solvents may be obtained.

Examples of the vinyl ester monomer as raw material of PVA constituting the polymer particles may include vinyl acetate, vinyl propionate, vinyl butyrate, vinyl valerate, vinyl caprate, vinyl laurate, vinyl stearate, vinyl benzoate, and vinyl pivalate, and a mixture thereof may be used. Vinyl acetate is preferred from the viewpoint of easy polymerization.

The PVA may be a saponified homopolymer of a vinyl ester monomer, or a saponified copolymer of a vinyl ester monomer and another monomer.

Further, examples of monofunctional monomers copolymerizable with a vinyl ester monomer (that is, monofunctional monomers other than vinyl ester) include the following compounds: an α-olefin or alpha-olefin monomer such as ethylene and propylene; a (meth)acrylic acid alkyl ester monomer such as methyl(meth)acrylate, ethyl(meth)acrylate, butyl(meth)acrylate, and 2-ethylhexyl(meth)acrylate; an unsaturated amide monomer such as (meth)acrylamide and N-methylol acrylamide; an unsaturated carboxylic acid monomer such as (meth)acrylic acid, crotonic acid, maleic acid, itaconic acid, and fumaric acid; an alkyl (methyl, ethyl, propyl, etc.) ester monomer of unsaturated carboxylic acid; an anhydrate of unsaturated carboxylic acid such as maleic anhydride; a sodium, potassium or ammonium salt of unsaturated carboxylic acid; a monomer containing sulfonic acid group such as 2-acrylamide-2-methylpropanesulfonic acid or a salt thereof; and an alkyl vinyl ether monomer.

Examples of other monomers that may be copolymerized with the vinyl ester monomer include a polyfunctional monomer and a monofunctional monomer. As the polyfunctional monomer, a compound having two or more polymerizable unsaturated bonds in the molecule may be preferably used. The number of polymerizable unsaturated regions in the polyfunctional monomer is preferably 2 to 5. Examples of the polyfunctional monomer include the following: a divinyl ether such as ethanediol divinyl ether, propanediol divinyl ether, butanediol divinyl ether, ethylene glycol divinyl ether, diethylene glycol divinyl ether, triethylene glycol divinyl ether, polyethylene glycol divinyl ether, propylene glycol divinyl ether, and polypropylene glycol divinyl ether, and a divinyl sulfonic acid compound; a diene compound such as pentadiene, hexadiene, heptadiene, octadiene, nonadiene, and decadiene; a diallyl ether compound such as glycerol diallyl ether, diethylene glycol diallyl ether, ethylene glycol diallyl ether, triethylene glycol diallyl ether, polyethylene glycol diallyl ether, trimethylolpropane diallyl ether, and pentaerythritol diallyl ether; a triallyl ether compound such as glycerol triallyl ether, trimethylolpropane triallyl ether, and pentaerythritol triallyl ether; a tetraallyl ether compound such as pentaerythritol tetraallyl ether; a polyfunctional monomer containing an allyl ester group such as diallyl phthalate, diallyl maleate, diallyl itaconate, diallyl terephthalate, and diallyl adipate; a diallylamine compound such as diallylamine and diallylmethylamine, and a polyfunctional monomer containing an allylamino group such as triallylamine; a polyfunctional monomer containing an allylammonium group such as a diallylammonium salt such as diallyldimethylammonium chloride; a polyfunctional monomer containing two or more allyl groups such as triallyl isocyanurate, 1,3-diallyl urea, triallyl phosphate, and diallyl disulfide; a polyfunctional monomer having (meth)acrylic acid such as ethylene glycol di(meth)acrylate, diethylene glycol di(meth)acrylate, triethylene glycol di(meth)acrylate, polyethylene glycol di(meth)acrylate, propylene glycol di(meth)acrylate, polypropylene glycol di(meth)acrylate, glycerol di(meth)acrylate, glycerol tri(meth)acrylate, pentaerythritol tri(meth)acrylate, trimethylol propane tri(meth)acrylate, ditrimethylol propane tetra(meth)acrylate, pentaerythritol tetra(meth)acrylate, dipentaerythritol hexa(meth)acrylate, and isocyanuric acid tri(meth)acrylate; a polyfunctional monomer having (meth)acrylamide such as N,N'-methylene bis(meth)acrylamide and N,N'-ethylene bis(meth)acrylamide; a polyfunctional aromatic monomer such as divinylbenzene and trivinylbenzene; and a glycidyl group-containing polyfunctional monomer such as allyl glycidyl ether and glycidyl (meth)acrylate.

As the other monomer copolymerizable with the vinyl ester monomer, a polyfunctional monomer is preferred, a compound having two or more polymerizable unsaturated bonds in the molecule is more preferred, and a compound having three or more polymerizable unsaturated bonds in the molecule is still more preferred.

Water-soluble additive

The water-soluble additive contained in the powder product (hereinafter, also simply referred to as "additive") is in liquid state at normal temperature (e.g., 20°C) as defined in JIS Z8703:1983, and the viscosity at 20°C is required to be in the range of 30 to 200 mPa·s determined at a shear rate of 10 s$^{-1}$ using a cone-plate type rotational viscometer (rheometer) in accordance to JIS Z8803:2011. A viscosity outside the range results in insufficient mixing with the polymer particles, so that poor solubility is obtained. In a preferred embodiment from the viewpoint of improving solubility, the viscosity of the additive under the conditions may be in the range of 30 to 150 mPa·s, more preferably in the range of 30 to 100 mPa·s.

The additive is also required to have a surface tension in the range of 50 to 72 mN/m as measured for a 0.05 mass% aqueous solution thereof at 20°C by the pendant drop method. In the present specification, the pendant drop method refers to the ds/de method. With a surface tension outside the range, the solubility of the powder product is inferior.

The mass of the additive in the powder product is in the range of 0.1 mass% or more and 10 mass% or less, based on the mass of the polymer particles. With a mass of the additive of less than 0.1 mass%, the solubility is poor under weak stirring conditions. With a mass of the additive of more than 10 mass%, the powder product is sticky, which results in adverse effect on the performance of the powder product, causing problems in operation during using or transporting the product or the like.

Additives are not particularly limited as long as they are water-soluble and have a viscosity and surface tension that satisfy the conditions described above. Examples thereof may include polyethers, polyhydric alcohols, polyoxyalkylenes, alcohol alkoxylate compounds, phenol alkoxylate compounds, silicone compounds, and mineral oils. Among these, those that may be used as nonionic surfactants and/or polyethers are preferred. Among polyethers, polyethylene glycol (polyethylene oxide) and polypropylene glycol are preferred. The number average molecular weight of the additive may preferably be in the range of 100 to 20000, more preferably in the range of 200 to 2000, and still more preferably in the range of 200 to 1500.

Powder product

The powder product containing the polymer particles and additives has a property suitable for dissolving in pure water or other aqueous solvents. The powder product is characterized in that the angle of repose is 60° or less as measured by the funnel injection method in accordance with the description in JIS R9301-2-2:1999 (in the specification, the measurement is performed with a protractor). With an angle of repose outside the range, the powder has too high aggregability, which results in adverse effect on the performance of the powder product, causing problems in operation during using or transporting the product. In a preferred embodiment, the angle of repose may be 20° or more and 60° or less, and more preferably 30° or more and 60° or less.

In a preferred embodiment, the angle of difference of the powder product may be 10° or more, and more preferably 10° or more and 40° or less. In the present specification, the angle of difference corresponds to the value obtained by subtracting the angle of collapse from the angle of repose, wherein the angle of collapse is measured by dropping a weight onto a sample of which angle of repose has been measured by the funnel injection method. With an angle of difference in the range described above, the effect of improving solubility in aqueous solvents may be obtained.

In a preferred embodiment, the compressibility of the powder product may be 45% or less, more preferably 10% or more and 45% or less, and still more preferably 10% or more and 40% or less. In the present specification, the compressibility is a percentage calculated by the following formula:

$$[\text{Compressibility}] \, (\%) = 100 \times ([\text{Tapped bulk density}] - [\text{Initial bulk density}]) / [\text{Tapped bulk density}]$$

wherein the initial bulk density and the tapped bulk density are values measured by the method in accordance with JIS R1628:1997. With a compressibility in the aforementioned range, the effect of improving the solubility in aqueous solvents may be obtained.

**EXAMPLES**

Hereinafter, the present invention will be described in more detail based on Examples. The examples described below illustrate typical examples of the present invention, and the present invention is not limited to the following examples.

Example 1

The polymer particles were synthesized according to the following procedure. A polymerization can equipped with a reflux condenser, a dropping funnel, and a stirrer was charged with 100 parts by mass of vinyl acetate, 117 parts by mass of methanol, and 0.016 parts by mass of Peroyl (registered trademark) NPP (manufactured by NOF Corporation) as initiator, and polymerization was performed at a boiling point for 5 hours while stirring in a nitrogen atmosphere (polymerization ratio: 88%). Then, an unreacted vinyl acetate monomer was removed from the polymerization system to obtain a methanol solution of polyvinyl acetate polymer. A methanol solution of sodium hydroxide was added to the solution (in terms of 0.007 moles of sodium hydroxide relative to the structural unit derived from vinyl acetate), and a saponification reaction was performed at 45°C for 90 minutes to obtain a PVA having a saponification degree of 88.1 mol%.

The resulting PVA was pulverized with an ACM pulverizer, and the PVA particles obtained after classification were sieved using sieves with 180 $\mu$m and 500 $\mu$m openings, respectively, in accordance with the description in JIS Z8815:1994 to measure the particle size distribution. The content above the 500-$\mu$m sieve was 0.1 mass% and the content below the 180-$\mu$m sieve was 99.1 mass%. The viscosity of a 4 mass% aqueous solution of the PVA was 5.4 mPa·s measured at 20°C with a Brookfield type (B type) rotational viscometer at a rotational speed of 30 rpm and a shear rate of 10 s$^{-1}$ in accordance with the description of the rotational viscometer method in JIS K6726:1994 and JIS K7117-1:1999.

Polyethylene glycol having a number average molecular weight of 300 (PEG-300) was prepared as an additive, of which viscosity was 70 mPa·s measured with a rheometer at a shear rate of 10 s$^{-1}$ in accordance with the description in JIS Z8803:2011. A 0.05 mass% aqueous solution of the additive was also prepared, of which surface tension was 68.8 mN/m as measured at 20°C by the pendant drop method using DMs-301 (Kyowa Interface Science Co., Ltd.). The surface tension of the water used as a control was also measured to be 70.2 mN/m.

The additive was mixed at a concentration of 3 mass% relative to the mass of the PVA to obtain the powder product in Example 1. As shown in the table, the physical properties of the following examples were measured in the same manner as in Example 1.

Example 2

The powder product of Example 2 was obtained in the same manner as in Example 1, except that the following procedure was used as the method for producing the polymer particles. A polymerization can equipped with a reflux condenser, a dropping funnel, and a stirrer was charged with 100 parts by mass of vinyl acetate, 15 parts by mass of methanol, and $5.0 \times 10^{-3}$ parts by mass of Peroyl NPP (manufactured by NOF Corporation) as initiator, and polymerization was performed at the boiling point for 5 hours while stirring in a nitrogen atmosphere (polymerization ratio: 55%). Then, an unreacted vinyl acetate monomer was removed from the polymerization system to obtain a methanol solution of polyvinyl acetate polymer. A methanol solution of sodium hydroxide was added to the solution (in terms of 0.007 moles of sodium hydroxide relative to the structural unit derived from vinyl acetate), and a saponification reaction was performed at 45°C for 90 minutes to obtain a PVA having a saponification degree of 87.9 mol%. The 4 mass% aqueous solution of the PVA had a viscosity of 56.8 mPa·s.

Example 3

The powder product of Example 3 was obtained in the same manner as in Example 1, except that the following procedure was used as the method for producing polymer particles. A polymerization can equipped with a reflux condenser, a dropping funnel, and a stirrer was charged with 100 parts by mass of vinyl acetate, 5 parts by mass of methanol, and $1.0 \times 10^{-3}$ parts by mass of Peroyl NPP (manufactured by NOF Corporation) as initiator, and polymerization was performed at a boiling point for 5 hours while stirring in a nitrogen atmosphere (polymerization ratio: 40%). Then, an unreacted vinyl acetate monomer was removed from the polymerization system to obtain a methanol solution of polyvinyl acetate polymer. A methanol solution of sodium hydroxide was added to the solution (in terms of 0.007 moles of sodium hydroxide relative to the structural unit derived from vinyl acetate), and a saponification reaction was performed at 45°C for 90 minutes to obtain a PVA having a saponification degree of 88.8 mol%. The 4 mass% aqueous solution of the PVA had a viscosity of 114.3 mPa·s.

Examples 4 to 6

Polymer particles were prepared according to the production method in Example 1 of International Publication No. WO 2019/163490. Specifically, a polymerization can equipped with a reflux condenser, a dropping funnel, and a stirrer was charged with 100 parts by mass of vinyl acetate, 0.16 parts by mass of triallyl isocyanurate (TAIC), 66.7 parts by mass of methanol, and 0.07 parts by mass of Peroyl NPP (manufactured by NOF Corporation) as initiator, and polymerization was performed at a boiling point for 5 hours while stirring in a nitrogen atmosphere (polymerization ratio: 50%). Then, an unreacted vinyl acetate monomer was removed from the polymerization system to obtain a methanol solution of polyvinyl acetate-TAIC copolymer. A methanol solution of sodium hydroxide was added to the solution (in terms of 0.007 moles of sodium hydroxide relative to the structural unit derived from vinyl acetate), and a saponification reaction was performed at 45°C for 90 minutes to obtain a PVA having a saponification degree of 89.5 mol%.

PVA particles were obtained by crushing and classifying in the same manner as in Example 1, and the additives and PVA particles were mixed in the ratios shown in the table to obtain powder products of Examples 4 to 6.

Comparative Example 1

A powder product of Comparative Example 1 was obtained by the same procedure as in Example 1, except that no additive was added.

Comparative Example 2

A powder product of Comparative Example 2 was obtained by the same procedure as in Example 4, except that no additive was added.

Comparative Example 3

A powder product of Comparative Example 3 was obtained by the same procedure as in Example 1, except that Adekanol UH-420 (manufactured by ADEKA Corporation, a special non-ionic polymer surfactant) was used as the additive.

Comparative Example 4

A powder product of Comparative Example 4 was obtained by the same procedure as in Example 4, except that glycerol was used as the additive.

Comparative Examples 5 and 6

Powder products of Comparative Examples 5 and 6 were obtained by the same procedure as in Example 4, except that SN Defoamer 485 (a mixture of a polyoxyalkylene-type nonionic surfactant, etc., manufactured by San Nopco Ltd.) was used as the additive.

Comparative Examples 7 and 8

Powder products of Comparative Examples 7 and 8 were obtained by the same procedure as in Example 4, except that SN Defoamer PC (a polyoxyalkylene-type nonionic surfactant, manufactured by San Nopco Ltd.) was used as the additive.

Comparative Example 9

A powder product of Comparative Example 9 was obtained by the same procedure as in Example 4, except that Noptam 740A (a mixture of polyoxyalkylene-type nonionic surfactant, silica, water, etc., manufactured by San Nopco Ltd.) was used as the additive.

Comparative Example 10

A powder product of Comparative Example 10 was obtained by the same procedure as in Example 4, except that the amount of additive was excessive.

Measurement of angle of repose and angle of difference

A funnel was set on a funnel injection platform provided on a Powder Tester (registered trademark) PT-E (manufactured by Hosokawa Micron Corporation), and 80 grams of the powder product of each Example was poured from the funnel and accumulated in a receiving tray. The angle of repose of the pile of powder product accumulated on the receiving tray was measured using a protractor. Then, the angle of collapse measuring weight provided on the measuring device was dropped three times onto the pile, of which angle of repose had been measured, according to the specification of the measuring device, and the angle of the collapsed pile was measured with a protractor to obtain the angle of collapse. The angle of difference was determined as the value obtained by subtracting the angle of collapse from the angle of repose. The results are shown in the table.

Measurement of compressibility

The evaluation was performed using Powder Tester PT-E (manufactured by Hosokawa Micron Corporation). A 100-mL metal container with which the tester was equipped was heaped up with powder product of each Example, of which surface was then scraped off using a blade, and the mass of the metal container was measured. The initial bulk density (also referred to as loose bulk density) was obtained by dividing the value obtained by subtracting the mass of the container from the mass after filling by the volume of the container.

Then, a dedicated cap was placed on the metal container, which was then heaped up with the powder product of each Example. The measurement mode of the tester was switched to tapping mode, and the container was tapped for 180 seconds. The surface of the powder was scraped off with a blade and the mass of the container was measured. The tapped bulk density (also referred to as compacted bulk density) was calculated in the same manner as the above.

The compressibility was calculated according to the following formula:

[Compressibility] (%) = 100 × ([Tapped bulk density] - [Initial bulk density]) / [Tapped bulk density] The results are shown in the table.

Solubility evaluation under strong stirring conditions

Into a 1-L flask, 200 mL of water at 20°C and 2.0 g of the powder product of each Example were added, and stirred for 20 minutes using a mechanical stirrer (rotating speed: 300 rpm) with an anchor-type stirring blade. The mixture was then filtered through a 150-mesh nylon screen and dried. The mass of the solid content of the residue was measured to determine what percentage of the original powder product had dissolved. The results are shown in the table. The case with a dissolution ratio of 90% or more was evaluated as suitable, and the case with a dissolution ratio of less than 90% was evaluated as unsuitable.

Solubility evaluation under weak stirring conditions

Into a 200-mL beaker, 200 mL of water at 20°C and a stirring bar were added, and the stirring bar was rotated at 200 rpm. The rotation speed of stirring bar was measured in advance using a non-contact laser tachometer. From above the beaker, 2.0 g of the powder product of each Example was added all at once and stirred for 20 minutes. The solution was then filtered using a 150-mesh nylon screen. The nylon screen was dried at 150°C for 1 hour or more, and the solid content of the residue was measured to evaluate the solubility in the same manner as described above. The results are shown in the table. The case with a dissolution ratio of 80% or more was evaluated as suitable, and the case with a dissolution ratio of less than 80% was evaluated as unsuitable.

[Table 1]

|  |  | Example 1 | Example 2 | Example 3 | Example 4 | Example 5 | Example 6 |
|---|---|---|---|---|---|---|---|
| Viscosity of 4 mass% aqueous solution of PVA | [mPa·s] | 5.4 | 56.8 | 114.3 | 118 | 118 | 118 |
| Saponification degree | [mol%] | 88.1 | 87.9 | 88.8 | 89.5 | 89.5 | 89.5 |
| Particle size: 500 μm or more | [mass%] | 0.1 | 0.1 | 0.1 | 0.1 | 0.1 | 0.1 |
| Particle size: 180 μm or less | [mass%] | 99.1 | 98.2 | 75.5 | 70.1 | 70.1 | 70.1 |
| Variant of polymer | [-] | - | - | - | TAIC | TAIC | TAIC |
| Type of additive | [-] | PEG-300 | PEG-300 | PEG-300 | PEG-300 | PEG-300 | PEG-300 |
| Viscosity of additive | [mPa·s] | 70 | 70 | 70 | 70 | 70 | 70 |

(continued)

| | | Example 1 | Example 2 | Example 3 | Example 4 | Example 5 | Example 6 |
|---|---|---|---|---|---|---|---|
| Surface tension of 0.05 mass% aqueous solution of additive | [mN/m] | 68.8 | 68.8 | 68.8 | 68.8 | 68.8 | 68.8 |
| Amount of additive | [mass%/PVA] | 3 | 3 | 3 | 1 | 3 | 6 |
| Solubility/weak stirring | [%] | 98.6 | 97.2 | 91.1 | 81.1 | 97.5 | 98.7 |
| Solubility/strong stirring | [%] | 99.1 | 98.0 | 96.0 | 94.0 | 98.0 | 99.6 |
| Compressibility | [%] | 36.7 | 37.2 | 35.9 | 33.2 | 37.7 | 41.1 |
| Angle of repose | [°] | 51.2 | 53.3 | 52.2 | 41.1 | 56.0 | 59.4 |
| Angle of difference | [°] | 12.7 | 13.1 | 13.2 | 14.8 | 13.5 | 11.1 |

[Table 2]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| Viscosity of 4 mass% aqueous solution of PVA | [mPa·s] | 5.4 | 118 | 5.4 | 118 | 118 | 118 | 118 | 118 | 118 | 118 |
| Saponification degree | [mol%] | 88.1 | 89.5 | 88.1 | 89.5 | 89.5 | 89.5 | 89.5 | 89.5 | 89.5 | 89.5 |
| Particle size: 500 μm or more | [mass%] | 0.0 | 0.2 | 0.1 | 0.1 | 0.2 | 0.2 | 0.1 | 0.1 | 0.2 | 0.1 |
| Particle size: 180 μm or less | [mass%] | 99.4 | 72.1 | 98.3 | 68.2 | 66.2 | 71.5 | 72.2 | 59.9 | 66.4 | 70.7 |
| Variant of polymer | [-] | - | TAIC | - | TAIC | TAIC | TAIC | TAIC | TAIC | TAIC | TAIC |
| Type of additive | [-] | - | - | UH-420 | Glycerol | SN Defoamer 485 | SN Defoamer 485 | SN Defoamer PC | SN Defoamer PC | Noptam 740A | PEG-300 |
| Viscosity of additive | [mPa·s] | - | - | 20000 | 850 | 300 | 300 | 750 | 750 | 300 | 70 |
| Surface tension of 0.05 mass% aqueous solution of additive | [mN/m] | - | - | 58.1 | 70.3 | 29.1 | 29.1 | 41.2 | 41.2 | 35.7 | 68.8 |
| Amount of additive | [mass%/PVA] | - | - | 3 | 3 | 1 | 3 | 1 | 3 | 1 | 12 |
| Solubility/weak stirring | [%] | 23.5 | 24.5 | 39.9 | 55.0 | 33.5 | 68.0 | 5.5 | 66.5 | 25 | 99.7 |
| Solubility/strong stirring | [%] | 100 | 90.5 | 100 | 99.4 | 97.5 | 99.1 | 96.0 | 98.8 | 96.5 | 99.9 |
| Compressibility | [%] | 15.4 | 20.1 | 38.9 | 16.4 | 32.2 | 36.6 | 33.4 | 35.9 | 37.2 | 47.8 |
| Angle of repose | [°] | 34.4 | 38.5 | 47.1 | 43.3 | 40.5 | 49.9 | 43.1 | 50.1 | 53.0 | 68.0 |
| Angle of difference | [°] | 14.3 | 16.5 | 11.7 | 12.0 | 15.1 | 12.8 | 13.2 | 12.2 | 15.5 | 9.0 |

In all of Examples 1 to 6, sufficient solubility was shown even under weak stirring conditions.

On the other hand, in Comparative Examples 1 to 9, although dissolution was achieved under strong stirring conditions, poor solubility was shown under weak stirring conditions. In Comparative Example 10, although sufficient solubility was shown, use as a product was unsuitable due to the presence of stickiness.

## Claims

1. A powder product comprising:

   polymer particles obtained by saponification of a polymer of a vinyl ester monomer or a copolymer of a vinyl ester monomer and another monomer, and having a particle size distribution with a content of particles having a particle size of 180 μm or less of 50 mass% or more and a content of particles having a particle size of 500 μm or more of 10 mass % or less; and
   a water-soluble additive in a mass of 0.1 mass% or more and 10 mass% or less based on a mass of the polymer particles,
   wherein the water-soluble additive has a viscosity at 20°C in a range of 30 to 200 mPa·s, and a surface tension in a range of 50 to 72 mN/m as measured for a 0.05 mass% aqueous solution of the water-soluble additive at 20°C by a pendant drop method, and
   wherein the powder product has an angle of repose of 60° or less as measured by a funnel injection method in accordance with JIS R9301-2-2:1999.

2. The powder product according to claim 1, wherein the powder product has an angle of difference of 10° or more as measured by the funnel injection method.

3. The powder product according to claim 1 or 2, wherein the powder product has a compressibility of 45% or less, calculated by the following formula:

   [Compressibility] (%) = 100 × ([Tapped bulk density] - [Initial bulk density]) / [Tapped bulk density] from initial bulk density and tapped bulk density measured by a method in accordance with JIS R1628:1997.

4. The powder product according to any one of claims 1 to 3, wherein the polymer particles comprise a polymer of a vinyl ester monomer.

5. The powder product according to any one of claims 1 to 3, wherein the polymer particles comprise a copolymer of a vinyl ester monomer and another monomer.

6. The powder product according to any one of claims 1 to 3 and 5, wherein the other monomer is a polyfunctional monomer.

7. The powder product according to claim 6, wherein the polyfunctional monomer is a compound having two or more polymerizable unsaturated bonds in a molecule.

# EP 4 692 176 A1

## INTERNATIONAL SEARCH REPORT

<table>
<tr><td colspan="2">International application No.</td></tr>
<tr><td colspan="2">PCT/JP2024/007427</td></tr>
</table>

### A. CLASSIFICATION OF SUBJECT MATTER

*C08J 3/12*(2006.01)i; *C08L 29/04*(2006.01)i; *C08L 31/02*(2006.01)i; *C08L 101/14*(2006.01)i
FI:  C08J3/12 CEX; C08L29/04 S; C08L31/02; C08L101/14

According to International Patent Classification (IPC) or to both national classification and IPC

### B. FIELDS SEARCHED

Minimum documentation searched (classification system followed by classification symbols)

C08J3/00-3/12; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | CN 103772862 A (SOUTH CHINA UNIVERSITY OF TECHNOLOGY) 07 May 2014 (2014-05-07) <br> claims, paragraphs [0002], [0020]-[0022], example 3 | 1-4 |
| Y | | 5-7 |
| Y | JP 2019-137870 A (KURARAY CO., LTD.) 22 August 2019 (2019-08-22) <br> claims, paragraphs [0020], [0036] | 5-7 |
| Y | WO 2019/078181 A1 (KURARAY CO., LTD.) 25 April 2019 (2019-04-25) <br> claims, paragraphs [0004], [0031] | 5-7 |
| Y | WO 2020/204120 A1 (KURARAY CO., LTD.) 08 October 2020 (2020-10-08) <br> claims, paragraphs [0005], [0037] | 5-7 |
| A | CN 109943260 A (BEIJING NOVELITE CO., LTD.) 28 June 2019 (2019-06-28) <br> entire text | 1-7 |

[✓] Further documents are listed in the continuation of Box C.      [✓] See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 May 2024 | 21 May 2024 |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**EP 4 692 176 A1**

## INTERNATIONAL SEARCH REPORT

| International application No. |
|---|
| **PCT/JP2024/007427** |

### C. DOCUMENTS CONSIDERED TO BE RELEVANT

| Category* | Citation of document, with indication, where appropriate, of the relevant passages | Relevant to claim No. |
|---|---|---|
| A | WO 2019/225731 A1 (KURARAY CO., LTD.) 28 November 2019 (2019-11-28)<br>entire text | 1-7 |
| A | JP 59-59742 A (E.I. DU PONT DE NEMOURS AND COMPANY) 05 April 1984 (1984-04-05)<br>entire text | 1-7 |
| A | JP 2019-94431 A (JAPAN VAM & POVAL CO., LTD.) 20 June 2019 (2019-06-20)<br>entire text | 1-7 |
| A | JP 8-269132 A (KURARAY CO., LTD.) 15 October 1996 (1996-10-15)<br>entire text | 1-7 |

Form PCT/ISA/210 (second sheet) (July 2022)

**INTERNATIONAL SEARCH REPORT**
Information on patent family members

International application No.

**PCT/JP2024/007427**

| Patent document cited in search report | | | Publication date (day/month/year) | Patent family member(s) | Publication date (day/month/year) |
|---|---|---|---|---|---|
| CN | 103772862 | A | 07 May 2014 | (Family: none) | |
| JP | 2019-137870 | A | 22 August 2019 | US 2017/0190812 A1 claims, paragraphs [0023], [0039] EP 3153531 A1 CN 106661147 A | |
| WO | 2019/078181 | A1 | 25 April 2019 | US 2020/0299435 A1 claims, paragraphs [0004], [0029] EP 3699207 A1 KR 10-2020-0062338 A CN 111448228 A | |
| WO | 2020/204120 | A1 | 08 October 2020 | US 2022/0177733 A1 claims, paragraphs [0005], [0035] EP 3950872 A1 CN 113874457 A | |
| CN | 109943260 | A | 28 June 2019 | (Family: none) | |
| WO | 2019/225731 | A1 | 28 November 2019 | US 2021/0179900 A1 entire text EP 3805279 A1 CN 112105657 A KR 10-2021-0015896 A | |
| JP | 59-59742 | A | 05 April 1984 | (Family: none) | |
| JP | 2019-94431 | A | 20 June 2019 | (Family: none) | |
| JP | 8-269132 | A | 15 October 1996 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019163490 A

**Non-patent literature cited in the description**

- *Denka Poval*, 2016